# EUROPEAN PATENT SPECIFICATION

(11) **EP 1 610 345 B1**
(45) Date of publication and mention of the grant of the patent: **27.08.2008**
(21) Application number: 05012741.4
(22) Date of filing: 14.06.2005
(51) Int. Cl.: G12B 21/02

(54) **Front-wing cantilever for the conductive probe of electrical scanning probe microscopes**
Biegebalken mit vorderen Flügeln für die leitfähige Sonde eines elektrischen Rastersondenmikroskops.
Élément en porte-à-faux avec des ailes anterieurs pour la sonde conductrice d'un microscope à sonde éléctrique de balayage.

(43) Date of publication of application: 28.12.2005
(73) Proprietor: National Applied Research Laboratories, Daan Chiu Taipei (TW)
(72) Inventor: Chang, Mao-Nan, Hsinchu (TW)
(74) Representative: Casalonga, Axel

(56) References cited:
- EP-A- 1 359 593
- WO-A-20/04112050
- WO-A-20/05020243
- US-A1- 2003 022 470
- US-B1- 6 279 389
- CHANG M N ET AL: "Approach to nonphotoperturbed differential capacitance measurements: a front-wing cantilever" APPLIED PHYSICS LETTERS AIP USA, vol. 87, no. 2, 11 July 2005 (2005-07-11), pages 23102-1-23102-3, XP002349923 ISSN: 0003-6951

## Description

The present invention relates to electrical scanning probe microscopes, particularly to a front-wing cantilever for the conductive probe of electrical scanning probe microscopes, which can avoid the optical perturbation.

The Electrical Scanning Probe Microscopy (ESPM), which is a widely applied technology for surface electrical property analysis, has the characteristics of easy performance and can directly and rapidly provide the nanometric electrical information of material surface, such as the variations of current, resistance, and capacitance, and the information gained thereby has the advantage of high accuracy. Via the conductive probe's contacting the surface of specimen, various applications of Electrical Scanning Probe Microscopy can be evolved, such as Scanning Capacitance Microscopy (SCM), Scanning Spreading Resistance Microscopy (SSRM), and Conductive Atomic Force Microscopy (CAFM).

Herein, the Electrical Scanning Probe Microscopy (ESPM) is to be exemplified by the Scanning Capacitance Microscope, which utilizes a phase-lock amplifier to amplify the detected small signal, and wherein a modulation voltage, which is an AC bias with a specific frequency and amplitude, is applied to the specimen surface via a conductive probe, and the frequency of the modulation voltage is feedback to the system's phase-lock amplifier to be a reference frequency. The signal of capacitance variation in the specimen surface, which is induced by the modulation voltage, also has the same specific frequency, and when the signal of capacitance variation is input to the phase-lock amplifier, the phase-lock amplifier can amplify the weak signal with the same specific frequency via the reference frequency. Therefore, the Scanning Capacitance Microscope has a very high sensitivity.

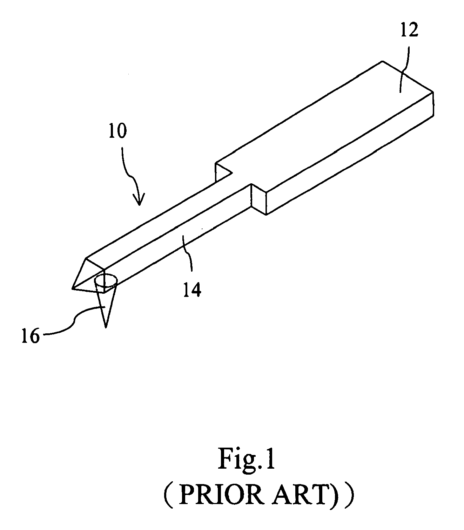

The conventional Scanning Capacitance Microscope generally adopts a conductive probe with a flattened type or a V type cantilever and a red laser as the optical-beam-deflection image-forming architecture of the atomic force microscope in order to synchronically obtain the topographic image and the corresponding differential capacitance image. As shown in Fig.1, the conventional cantilever structure 10 has: a cantilever holder 12; a cantilever 14, extending out from the cantilever holder 12; a tip 16, installed below the end of the cantilever 14. The conventional cantilever structure has the following disadvantages:
1. The contrast of differential capacitance image is inferior. The stray light from the red laser results in optical absorption, which further induces carrier injection. The carrier injection results in less difference between the differential capacitance signals of low and high carrier concentration regions. Thus, the contrast of differential capacitance image becomes small.
2. The measured electrical junction width is smaller than the real one. The photovoltaic effect created by the optical absorption results in that the measured junction width is smaller than the real one. Thus, P-N junction width measured thereby is inaccurate.
3. As the optical perturbation results from the optical absorption of material, the above problems will become more serious for narrow energy gap materials, such as Si₁₋ₓGeₓ, GaAs, InP, etc.

In particular, document EP-A-1 359 593 discloses low cost production cantilever structures, wherein a tip is located at the end of the cantilever on the thinnest side of the cantilever.

To solve the aforementioned problems, the present invention proposes a front-wing cantilever for the conductive probe of electrical scanning probe microscopes, which not only can avoid the optical perturbation on the measurement and analysis of electrical signals but also can still analyze the topography of material surface synchronically.

The primary objective of the present invention is to provide a front-wing cantilever for the conductive probe of electrical scanning probe microscopes, which can inhibit the optical perturbation in electrical scanning probe microscopes and can obviously promote the analysis accuracy.

Another objective of the present invention is to provide a front-wing cantilever for the conductive probe of electrical scanning probe microscopes, which can solve the perturbation on the electrical signals, which is induced by the laser beam of the topographic image-formation architecture, and which also can still enable the topography of material surface to be synchronically analyzed.

Yet another objective of the present invention is to provide a front-wing cantilever for the conductive probe of electrical scanning probe microscopes, which utilizes the front wings of cantilever to effectively block the stray light from the laser in order to enable the differential capacitance signal to be obviously enhanced, the image contrast to be promoted, and the P-N junction width to be accurately measured.

To achieve the aforementioned objectives, as claimed, a front-wing cantilever structure for conductive probe of electrical scanning probe microscopes using a laser beam deflection method is coupled to a cantilever holder, and comprises: a cantilever, with a first end of said cantilever coupled to said cantilever holder and a tip installed on the bottom of a second end of said cantilever, said cantilever comprising two symmetric front-wings separately extending out from the second end of said cantilever. According to the invention, the two front wings are positioned on both lateral sides of said conductive tip in such a way as to block the stray light from the laser, and provide an effective dark field for the scanned region. This dark field can effectively inhibit the optical perturbation effect in the electrical scanning probe microscopes.

To enable the objectives, technical contents, characteristics, and accomplishments of the present invention to be more easily understood, the embodiments of the present invention are to be described below in detail in cooperation with the attached drawings.
- Fig.1: is the schematic structure diagram of a conventional cantilever structure.
- Fig.2: is the schematic structure diagram of the front-wing cantilever for conductive probe according to one embodiment of the present invention.
- Fig.3A: is the schematic structure diagram of the front-wing cantilever for conductive probe according to anther embodiment of the present invention.
- Fig.3B: is the schematic structure diagram of the front-wing cantilever for conductive probe according to yet anther embodiment of the present invention.
- Fig.4A: is the top view of the positions hit by the laser beams during the verification of the present invention.
- Fig.4B: shows the scanning capacitance spectroscopy (SCS) curves measured in the structure and positions shown in Fig.4A.
- Fig.5A: is the top view of the positions hit by the laser beams during the verification of the conventional cantilever.
- Fig.5B: shows the scanning capacitance spectroscopy (SCS) curves measured in the structure and positions shown in Fig.5A.

Herein, the present invention is to be exemplified by Scanning Capacitance Microscope (SCM); however, it is not intended to limit the scope of the present invention, and the application of the present invention to other Electrical Scanning Probe Microscopes, such as Scanning Spreading Resistance Microscopy (SSRM) and Conductive Atomic Force Microscopy (CAFM) are to be included within the scope of the present invention. The Scanning Capacitance Microscope primarily applies to the analysis of 2-dimensional distribution of carrier concentration and the measurement of the effective channel length of Metal Oxide Semiconductor (MOS) devices. However, the Scanning Capacitance Microscope is influenced by an optical perturbation, which brings about the increase in P-N junction measurement error and the decrease in image contrast. Owing to the above problems, when the Scanning Capacitance Microscope analyzes the carrier concentration distribution and the junction image within a nanometric area, the result will lack accuracy and reliability. Therefore, this embodiment of the present invention proposes a front-wing cantilever for the conductive probe for Scanning Capacitance Microscopes, which can enable the optical perturbation to be inhibited, so that the image contrast can be enhanced, measurement error can be reduced, and the carrier distribution microanalysis can be accurately performed by the present invention's low-optical perturbation technology of differential capacitance analysis.

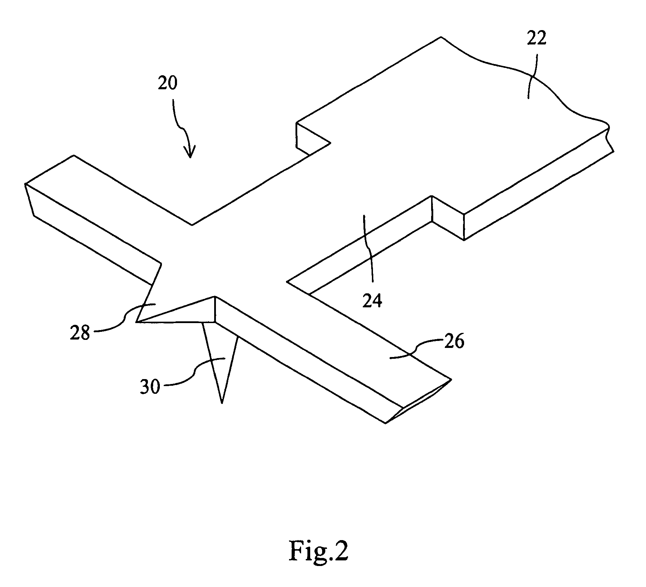

Referring to Fig.2 the schematic structure diagram of the front-wing cantilever for conductive probe of the present invention, the front-wing cantilever 20 for conductive probe is installed on a cantilever holder 22, and the cantilever holder 22 is fixed to a probe seat of scanning capacitance microscope (not shown in the drawing). The front-wing cantilever structure 20 comprises a cantilever 24, and two front wings 26 on two lateral sides of the cantilever 24, wherein the cantilever 24 and the front wings 26 can be formed into a unitary body during fabrication. The cantilever 24 has a first end and a second end, and the first end of the cantilever 24 is coupled to the cantilever holder 22, and the second end of the cantilever 24 has a sharpened-point structure 28. A conductive tip 30 projects downward from the bottom of the second end; the conductive tip 30 and the front-wing cantilever 20 can also be formed into a unitary body during fabrication. Two symmetric front wings 26 separately extend out from two lateral sides of the second end of the cantilever 24; the front wings 26 are separately positioned on both lateral sides of the conductive tip 30 and provide an effective dark field for the scanned region.

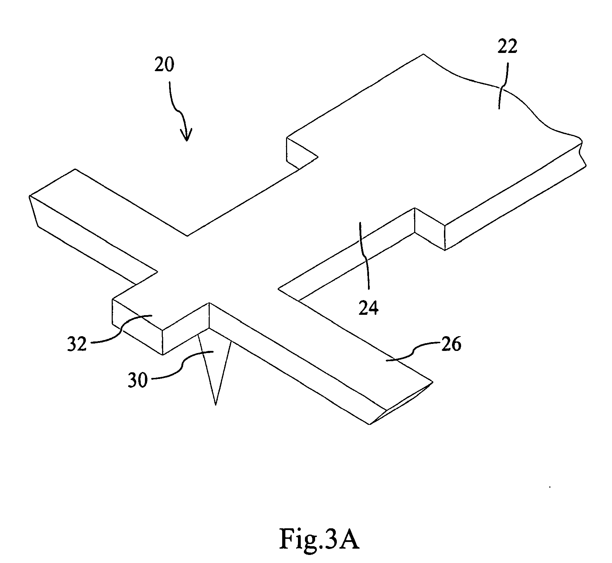

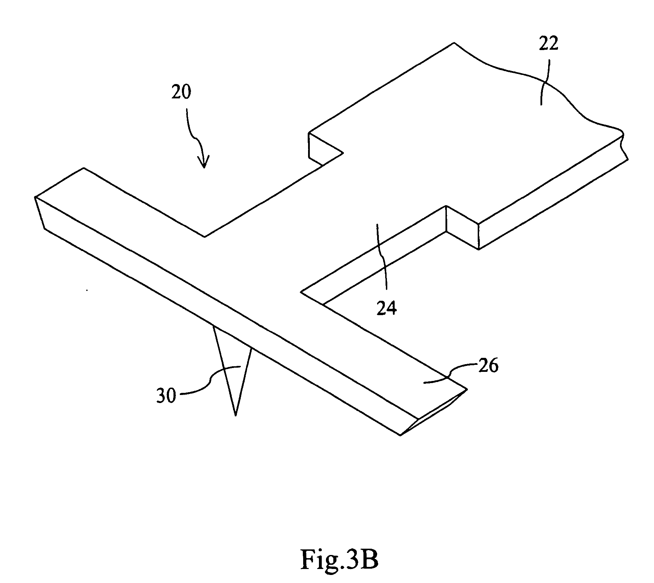

In addition to the sharpened-point structure 28 shown in Fig.2, the second end of the cantilever 24 can also be a flattened structure 32, as shown in Fig.3A, or be other salient structures, wherein two front wings 26 can also provide an effective dark field for the scanned region of scanning capacitance microscope. As shown in Fig.3B, the second end of the cantilever 24 can also be free of the sharpened-point structure 28 or the flattened structure 32, i.e. the second end of the cantilever 24 and the front sides of the front wings 26 are together flattened into a straight line, wherein two front wings 26 can also provide an effective dark field for the scanned region of scanning capacitance microscope.

The front-wing cantilever structure 20 of the present invention shown in Fig.2 and the conventional cantilever shown in Fig.1 are to be verified below in order to proof that the front-wing cantilever for the conductive probe of electrical scanning probe microscopes of the present invention can effectively block the stray light from the laser and can be free from the optical absorption and can obviously enhance the differential capacitance signal.

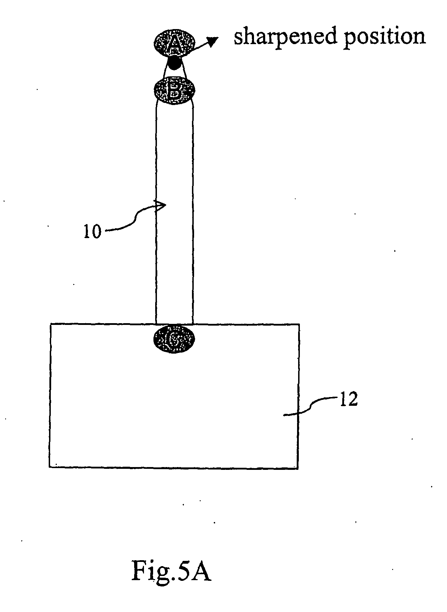

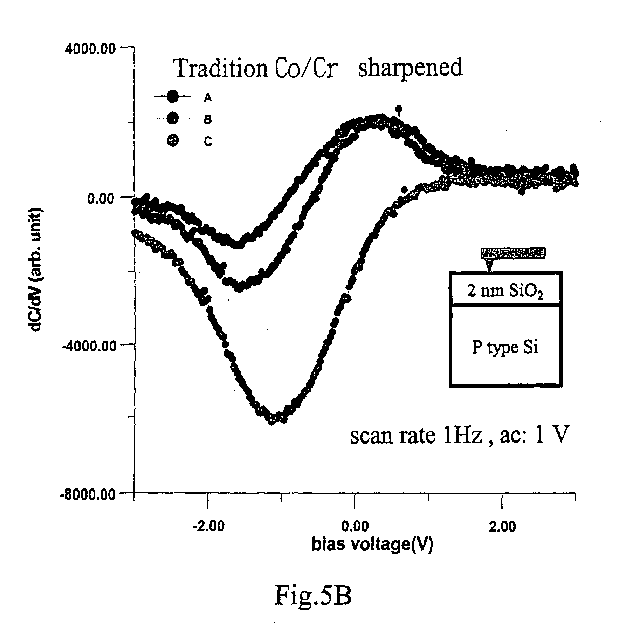

Referring to Fig.5A and Fig.5B, the laser beam hits on the positions labeled A and B of the conventional cantilever 10 and the position labeled C of the cantilever holder 12 separately, and the differential capacitance with respect to direct-current bias voltage is measured in each aforementioned positions. As shown in Fig.5B, as there is no optical perturbation in position C, the measurement result is normal, and as there is the influence of the stray light from the laser, the measured differential capacitance is lowered in the depletion regime and contrarily raised in the inversion region.

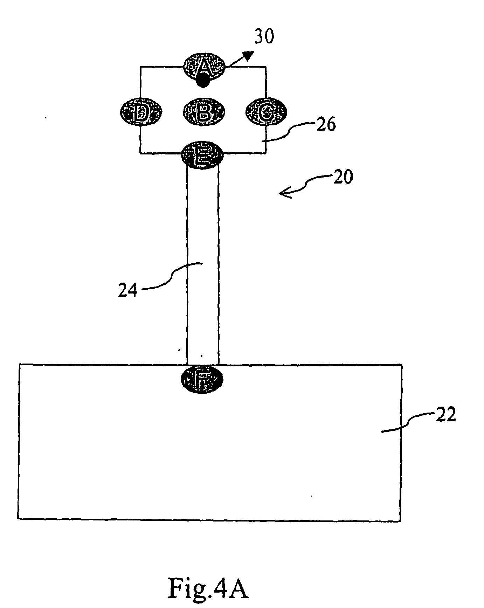

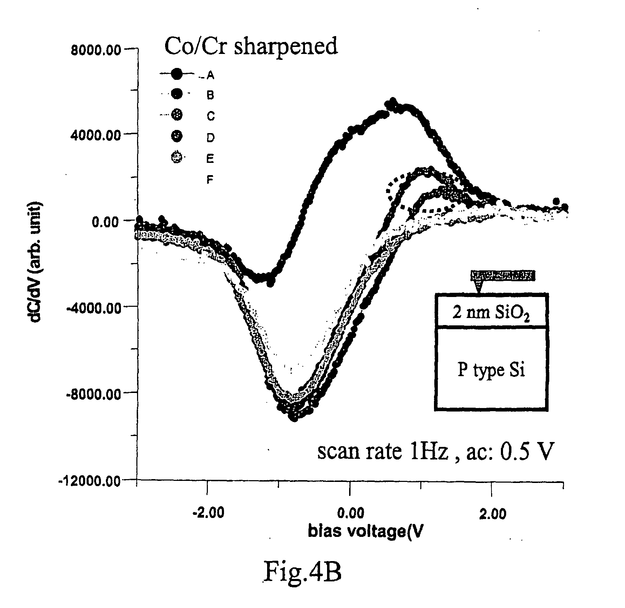

Referring to Fig.4A and Fig.4B, the laser beam hits on the positions labeled A, B, C, D, and E of the front-wing cantilever 20 of the present invention and the position labeled F of the cantilever holder 22 separately, and the differential capacitance with respect to direct-current bias voltage is measured in each aforementioned positions. As shown in Fig.4B, the measurement result in position B is somewhat better than that in position F, which means that there is no influence of the stray light at all in position B, i.e. the front wings 26 can effectively block the stray light from the laser, and superior signals can be obtained in position B.

Accordingly, the front-wing cantilever for conductive probe of the present invention can effectively block the stray light from the laser, diminish the optical absorption, and enhance the differential capacitance signal, which enables the P-N junction width to be accurately measured. For narrow energy gap materials, such as Si₁₋ₓGeₓ, GaAs, InP, etc., the present invention can thoroughly solve the optical perturbation on the differential capacitance signal induced by the laser beam of the surface topographic image-forming architecture, and the topographic analysis of material surface can still be performed synchronically.

## Claims

1. A front-wing cantilever structure for the conductive probe of electrical scanning probe microscopes using a laser beam deflection method, which is coupled to a cantilever holder and comprises:
a cantilever (24), with a first end of said cantilever coupled to said cantilever holder (22) and a tip (30) installed on the bottom of a second end of said cantilever, said cantilever comprising two symmetric front-wings (26) separately extending out from the second end of said cantilever (24), **characterized in that** said two front wings (26) are positioned on both lateral sides of said conductive tip in such a way as to block the stray light from the laser, and provide an effective dark field for the scanned region.

2. The front-wing cantilever for the conductive probe of electrical scanning probe microscopes according to claim 1, wherein said cantilever **(24)** and said two front wings **(26)** are formed into a unitary body during fabrication.

3. The front-wing cantilever for the conductive probe of electrical scanning probe microscopes according to claim 1, wherein said tip **(30),** said cantilever **(24)** and said two front wings **(26)** are formed into a unitary body during fabrication.

4. The front-wing cantilever for the conductive probe of electrical scanning probe microscopes according to claim 1, wherein said second end of said cantilever **(24)** is a salient structure.

5. The front-wing cantilever for the conductive probe of electrical scanning probe microscopes according to claim 4, wherein said salient structure is a sharpened-point structure **(28)** or a flattened structure **(32).**

## Patentansprüche

1. Biegebalkenstruktur mit Vorderflügel für die leitfähige Sonde elektrischer Rastersondenmikroskope, die nach einem Laserstrahlablenkverfahren arbeiten, wobei die Struktur mit einer Biegebalkenhalterung verbunden ist und Folgendes umfasst:
einen Biegebalken (24), wobei ein erstes Ende des Biegebalkens mit der Biegebalkenhalterung (22) verbunden ist und eine Spitze (30) auf der Unterseite eines zweiten Endes des Biegebalkens montiert ist, wobei der Biegebalken zwei symmetrische Vorderflügel (26) umfasst, die getrennt voneinander aus dem zweiten Ende des Biegebalkens (24) herausragen, **dadurch gekennzeichnet, dass** die zwei Vorderflügel (26) auf beiden Seiten der leitfähigen Spitze so positioniert sind, dass das Streulicht aus dem Laser abgeschirmt wird, und ein wirksames Dunkelfeld für den abgetasteten Bereich bereitstellen.

2. Biegebalken mit Vorderflügeln für die leitfähige Sonde von elektrischen Rastersondenmikroskopen nach Anspruch 1, wobei der Biegebalken (24) und die beiden Vorderflügel (26) während der Fertigung zu einem einstückigen Körper ausgebildet werden.

3. Biegebalken mit Vorderflügeln für die leitfähige Sonde von elektrischen Rastersondenmikroskopen nach Anspruch 1, wobei die Spitze (30), der Biegebalken (24) und die beiden Vorderflügel (26) während der Fertigung zu einem einstückigen Körper ausgebildet werden.

4. Biegebalken mit Vorderflügeln für die leitfähige Sonde von elektrischen Rastersondenmikroskopen nach Anspruch 1, wobei das zweite Ende des Biegebalkens (24) eine vorspringende Struktur ist.

5. Biegebalken mit Vorderflügeln für die leitfähige Sonde von elektrischen Rastersondenmikroskopen nach Anspruch 4, wobei die vorspringende Struktur eine zugespitzte Struktur (28) oder eine abgeflachte Struktur (32) ist.

## Revendications

1. Structure de levier en porte-à-faux à aile antérieure pour la sonde conductrice de microscopes à sonde à balayage électrique utilisant un procédé de déviation de faisceau laser, qui est couplée à un support de levier en porte-à-faux, et comprend :
un levier en porte-à-faux (24), dont une première extrémité est couplée audit support de levier en porte-à-faux (22) et une pointe (30) installée sur le dessous d'une deuxième extrémité dudit levier en porte-à-faux, ledit levier en porte-à-faux comprenant deux ailes antérieures symétriques (26) s'étendant séparément à partir de la deuxième extrémité dudit levier en porte-à-faux (24), **caractérisée en ce que** lesdites deux ailes antérieures (26) sont positionnées sur les deux côtés latéraux de ladite pointe conductrice de façon à bloquer la lumière parasite provenant du laser et à procurer un fond noir effectif pour la région balayée.

2. Structure de levier en porte-à-faux à aile antérieure pour la sonde conductrice de microscopes selon la revendication 1, dans laquelle ledit levier en porte-à-faux (24) et lesdites deux ailes antérieures (26) sont formés en un corps unitaire durant la fabrication.

3. Structure de levier en porte-à-faux à aile antérieure pour la sonde conductrice de microscopes selon la revendication 1, dans laquelle ladite pointe (30), ledit levier en porte-à-faux (24), et lesdites deux ailes antérieures (26) sont formés en un corps unitaire durant la fabrication.

4. Structure de levier en porte-à-faux à aile antérieure pour la sonde conductrice de microscopes selon la revendication 1, dans laquelle ladite deuxième extrémité dudit levier en porte-à-faux (24) est une structure saillante.

5. Structure de levier en porte-à-faux à aile antérieure pour la sonde conductrice de microscopes selon la revendication 4, dans laquelle ladite structure saillante est une structure à pointe acérée (28) ou une structure aplatie (32).
